# EUROPEAN PATENT APPLICATION

(11) **EP 4 379 564 A1**
(43) Date of publication of application: **05.06.2024**
(21) Application number: 21952142.4
(22) Date of filing: 31.07.2021
(51) Int. Cl.: G06F 15/80

(54) **PROCESSOR AND COMMUNICATION METHOD**

(71) Applicant: Huawei Technologies Co., Ltd., Shenzhen, Guangdong 518129 (CN)
(72) Inventor: LAM, Hou Fun, Shenzhen, Guangdong 518129 (CN); LIU, Hu, Shenzhen, Guangdong 518129 (CN); WANG, Xusheng, Shenzhen, Guangdong 518129 (CN)
(74) Representative: MERH-IP Matias Erny Reichl Hoffmann Patentanwälte PartG mbB
(86) International application number: PCT/CN2021/109934
(87) International publication number: WO 2023/010232

(57) **Abstract**

Embodiments of this application disclose a processor and a communication method. The processor includes a primary core and a secondary core. The primary core is configured to transfer input parameters of a first function to a secondary core. The primary core is further configured to send first information to the secondary core. The first information is used by the secondary core to obtain the first function. The secondary core is configured to obtain the first function based on the first information, and run the first function based on the input parameters of the first function. The primary core is further configured to send second information to the secondary core. The second information is used by the secondary core to obtain a second function. The secondary core is further configured to obtain the second function based on the second information. The primary core is further configured to: when determining that input parameters of the second function are the same as the input parameters of the first function, control the secondary core to run the second function based on the input parameters of the first function. When the input parameters of the second function are the same as the input parameters of the first function, overheads of transferring the input parameters of the second function by the primary core to the secondary core can be reduced, and time for the secondary core to run the second function can be reduced.

## Description

### TECHNICAL FIELD

Embodiments of this application relates to the communication field, and in particular, to a processor and a communication method.

### BACKGROUND

In recent years, with good performance of a convolutional neural network, a new application such as autonomous driving has attracted much attention. The convolutional neural network needs some computer vision (computer vision, CV) algorithms for pre-/post-processing. Due to high parallelism of the CV algorithms, a vector processor is generally used.

Currently, there are several manners for connecting the vector processor to a primary processor. A first manner is full decoupling. In this manner, the vector processor is a completely independent core. A second manner is loose coupling. In this manner, the vector processor obtains a task from the primary processor, and runs the task in parallel with the primary processor until the vector processor is synchronized with the primary processor. A third manner is tight coupling. In this manner, the vector processor may be considered as a part of the primary processor.

When the vector processor is connected to the primary processor in the manner of loose coupling, how to improve efficiency of transmitting data between the primary processor and the vector processor is an urgent technical problem to be resolved.

### SUMMARY

Embodiments of this application provide a processor and a communication method. A primary core in the processor is configured to: when determining that input parameters of a second function are the same as input parameters of the first function, control a secondary core to run the second function based on the input parameters of the first function. Overheads of transferring the input parameters of the second function are reduced, and time for the secondary core to run the second function is reduced.

According to a first aspect, an embodiment of this application provides a processor. The processor includes a primary core and a secondary core. The processor may be used in a scenario such as a vehicle-mounted visual perception device or a mobile phone terminal. The primary core is configured to transfer input parameters of a first function to the secondary core. The primary core is further configured to send first information to the secondary core. The first information is used by the secondary core to obtain the first function. The secondary core is configured to obtain the first function based on the first information, and run the first function based on the input parameters of the first function. The primary core is further configured to send second information to the secondary core. The second information is used by the secondary core to obtain a second function. The secondary core is further configured to obtain the second function based on the second information. The primary core is further configured to: when determining that input parameters of the second function are the same as the input parameters of the first function, control the secondary core to run the second function based on the input parameters of the first function.

In this embodiment, when the input parameters of the second function are the same as the input parameters of the first function, overheads of transferring the input parameters of the second function by the primary core to the secondary core may be reduced, and time for the secondary core to run the second function may be reduced.

Optionally, in a possible implementation of the first aspect, that input parameters of the second function are the same as the input parameters of the first function includes: Apart of the input parameters of the second function is the same as that of the input parameters of the first function. The primary core is further configured to transfer a distinguishing parameter to the secondary core, and control the secondary core to run the second function based on the distinguishing parameter and the input parameters of the first function. The distinguishing parameter is a parameter that is in the input parameters of the second function and that is different from the input parameters of the first function.

In this possible implementation, when the input parameters of the first function are the same as the input parameters of the second function, compared with transmitting the input parameters of the second function completely, overheads of transferring the input parameters of the second function are reduced by transmitting second indication information and the distinguishing parameter.

Optionally, in a possible implementation of the first aspect, the secondary core is further configured to store the input parameters of the first function in a plurality of registers. The primary core is further configured to transfer first indication information to the secondary core. The first indication information indicates the secondary core to update a parameter stored in a first register to the distinguishing parameter. The plurality of registers include the first register and a second register. The second register stores the same part of the parameters. The secondary core is specifically configured to use, based on the first indication information, the distinguishing parameter to update the parameter stored in the first register, and use the distinguishing parameter and the same part of the parameters as the input parameters of the second function to run the second function.

In this possible implementation, the primary core transfers the first indication information to the secondary core, so that the secondary core can use the distinguishing parameter and the same part of the parameters as the input parameters of the second function to run the function. Compared with transmitting the input parameters of the second function completely, overheads of transferring all of the input parameters of the second function are reduced.

Optionally, in a possible implementation of the first aspect, the first indication information includes a plurality of bits. The plurality of bits correspond to the plurality of registers. One bit of the plurality of bits indicates whether the secondary core uses the distinguishing parameter to update a parameter stored in at least one register corresponding to the one bit.

In this possible implementation, when the input parameters of the first function are the same as the input parameters of the second function, the bit of the second indication information indicates whether the parameter stored in the register is changed, so that transmission overheads caused by repeatedly sending a same input parameter may be reduced.

Optionally, in a possible implementation of the first aspect, the primary core is further configured to: when determining that the input parameters of the second function are different from the input parameters of the first function, transfer the input parameters of the second function to the secondary core, and control the secondary core to run the second function based on the input parameters of the second function. Optionally, the secondary core is configured to: when running the first function, receive the input parameters that are of the second function and that are transferred by the primary core.

In this possible implementation, the secondary core may run the first function, and simultaneously receives the input parameters of the second function, to improve efficiency of the secondary core running a plurality of functions.

Optionally, in a possible implementation of the first aspect, the processor further includes a first in first out FIFO queue. The secondary core is specifically configured to send the first information and the second information to the secondary core by using the FIFO queue.

In this possible implementation, the primary core may send the first information and the second information to the secondary core by using a same queue, to improve efficiency of the secondary core obtaining a function.

Optionally, in a possible implementation of the first aspect, the processor further includes a parameter buffer. The primary core is specifically configured to transfer the input parameters of the first function by using the parameter buffer. The secondary core is further configured to store, in the plurality of registers of the secondary core, input parameters that are of the first function and that are stored in the parameter buffer. The first information includes an address of the first function, a length of the first function, a first slot identifier of the first function, and second indication information of the first function. The first slot identifier indicates a slot identifier corresponding to a first slot that is in the parameter buffer and that stores the input parameters of the first function. The second indication information indicates whether to release the first slot after the secondary core completes running of the first function. When the input parameters of the second function are the same as the input parameters of the first function, the second indication information specifically indicates to reserve a parameter stored in the first slot after the secondary core completes the running of the first function. A second slot identifier is completely or partially the same as the first slot identifier. Alternatively, when the input parameters of the second function are different from the input parameters of the first function, the second indication information specifically indicates to release the first slot after the secondary core completes the running of the first function. The second information includes an address of the second function, a length of the second function, and a second slot identifier of the second function. The second slot identifier indicates a slot identifier corresponding to a second slot that is in the parameter buffer and that stores the input parameters of the second function.

In this possible implementation, when all of the input parameters of the first function are the same as that of the input parameters of the second function, a slot identifier that is the same as the input parameters of the first function is transmitted, so that the secondary core can correctly obtain the input parameters of the second function from the parameter buffer. In addition, the primary core is configured to indicate, by using the second indication information, whether the secondary core releases the slot after completing running of a function. Therefore, when the input parameters of the first function are the same as or partially the same as the input parameters of the second function, a problem that the secondary core cannot correctly run the function is avoided, where the problem is caused by a parameter falsely overwritten in a slot.

According to a second aspect, an embodiment of this application provides a communication method. The method may be applied to a processor. The processor includes a primary core and a secondary core. The method includes: The primary core transfers input parameters of a first function to the secondary core. The primary core sends first information to the secondary core. The first information is used by the secondary core to obtain the first function. The secondary core obtains the first function based on the first information, and runs the first function based on the input parameters of the first function. The primary core sends second information to the secondary core. The second information is used by the secondary core to obtain a second function. The secondary core obtains the second function based on the second information. When determining that input parameters of the second function are the same as the input parameters of the first function, the primary core controls the secondary core to run the second function based on the input parameters of the first function.

Optionally, in a possible implementation of the second aspect, that input parameters of the second function are the same as the input parameters of the first function includes: Apart of the input parameters of the second function is the same as that of the input parameters of the first function. The method further includes: The primary core transfers a distinguishing parameter to the secondary core, and controls the secondary core to run the second function based on the distinguishing parameter and the input parameters of the first function. The distinguishing parameter is a parameter that is in the input parameters of the second function and that is different from the input parameters of the first function.

Optionally, in a possible implementation of the second aspect, the foregoing steps further include: The primary core transfers first indication information to the secondary core. The first indication information indicates the secondary core to update a parameter stored in a first register to the distinguishing parameter. A plurality of registers include the first register and a second register. The second register stores the same part of parameter. The plurality of registers are configured to store the input parameters of the first function. The secondary core uses, based on the first indication information, the distinguishing parameter to update the parameter stored in the first register, and uses the distinguishing parameter and the same part of the parameters as the input parameters of the second function to run the second function.

Optionally, in a possible implementation of the second aspect, the first indication information includes a plurality of bits. The plurality of bits correspond to the plurality of registers. One bit of the plurality of bits indicates whether the secondary core uses the distinguishing parameter to update a parameter stored in at least one register corresponding to the one bit.

Optionally, in a possible implementation of the second aspect, the foregoing steps further include: When determining that the input parameters of the second function are different from the input parameters of the first function, the primary core transfers the input parameters of the second function to the secondary core, and controls the secondary core to run the second function based on the input parameters of the second function. Optionally, when running the first function, the secondary core receives the input parameters that are of the second function and that are transferred by the primary core.

Optionally, in a possible implementation of the second aspect, the processor further includes a first in first out FIFO queue. That the primary core sends first information to the secondary core includes: The secondary core sends the first information to the secondary core by using the FIFO queue. That the primary core sends second information to the secondary core includes: The secondary core sends the second information to the secondary core by using the FIFO queue.

Optionally, in a possible implementation of the second aspect, the processor further includes a parameter buffer. That the primary core transfers input parameters of a first function to the secondary core includes: The primary core transfers the input parameters of the first function by using the parameter buffer. The method further includes: The secondary core stores, in the plurality of registers of the secondary core, input parameters that are of the first function and that are stored in the parameter buffer. The first information includes an address of the first function, a length of the first function, a first slot identifier of the first function, and second indication information of the first function. The first slot identifier indicates a slot identifier corresponding to a first slot that is in the parameter buffer and that stores the input parameters of the first function. The second indication information indicates whether to release the first slot after the secondary core completes running of the first function. When the input parameters of the second function are the same as the input parameters of the first function, the second indication information specifically indicates to reserve a parameter stored in the first slot after the secondary core completes the running of the first function. A second slot identifier is completely or partially the same as the first slot identifier. Alternatively, when the input parameters of the second function are different from the input parameters of the first function, the second indication information specifically indicates to release the first slot after the secondary core completes the running of the first function. The second information includes an address of the second function, a length of the second function, and the second slot identifier of the second function. The second slot identifier indicates a slot identifier corresponding to a second slot that is in the parameter buffer and that stores the input parameters of the second function.

For technical effects brought by any one of the second aspect or the possible implementations thereof, refer to technical effects brought by the first aspect or different possible implementations of the first aspect. Details are not described herein again.

It can be learned from the foregoing technical solutions that, embodiments of this application have the following advantages. The primary core in the processor is configured to: when determining that the input parameters of the second function are the same as the input parameters of the first function, control the secondary core to run the second function based on the input parameters of the first function. When the input parameters of the second function are the same as the input parameters of the first function, the overheads of transferring the input parameters of the second function by the primary core to the secondary core may be reduced, and the time for the secondary core to run the second function may be reduced.

### BRIEF DESCRIPTION OF DRAWINGS

FIG. 1 is a schematic diagram of a structure of a communication device according to this application;
FIG. 2 is a schematic diagram of a structure of a processor according to this application; and
FIG. 3 is a schematic flowchart of a communication method according to this application.

### DESCRIPTION OF EMBODIMENTS

Embodiments of this application provide a processor and a communication method. When input parameters of a first function are the same as input parameters of a second function, a primary core in the processor may control a secondary core to run the second function based on the input parameters of the first function, to reduce overheads of transferring the input parameters of the second function, and reduce time for the secondary core to run the second function.

The following describes technical solutions in embodiments of the present invention with reference to the accompanying drawings in embodiments of the present invention. It is clear that the described embodiments are merely a part rather than all of embodiments of the present invention. All other embodiments obtained by a person of ordinary skill in the art based on embodiments of the present invention without creative efforts shall fall within the protection scope of the present invention.

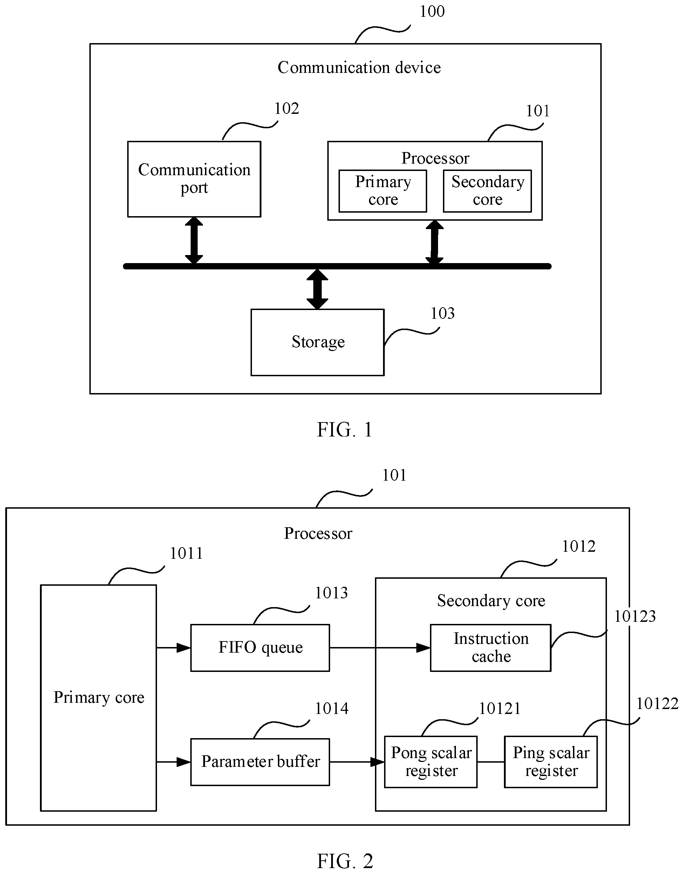

FIG. 1 is a schematic diagram of a hardware structure of a communication device according to an embodiment of this application. A communication device 100 shown in FIG. 1 includes a processor 101, a communication port 102, and a storage 103. Communication connections between the processor 101, the communication port 102, and the storage 103 may be implemented through a bus.

The communication device may be a device such as a vehicle-mounted visual perception device or a terminal device. The terminal device may include a head-mounted display (head-mounted display, HMD) device. The head-mounted display may be a combination of a virtual reality (virtual reality, VR) box and a terminal. The terminal device may include an all-in-one VR machine, a personal computer (personal computer, PC), an augmented reality (augmented reality, AR) device, a mixed reality (mixed reality, MR) device, or the like. The terminal device may further include a cellular phone (cellular phone), a smartphone (smartphone), a personal digital assistant (personal digital assistant, PDA), a tablet computer, a laptop computer (laptop computer), a personal computer (personal computer, PC), a vehicle-mounted terminal, or the like. This is not specifically limited herein.

The processor 101 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement a function that needs to be executed by a unit in the communication device in embodiments of this application.

The processor 101 may alternatively be an integrated circuit chip and has a signal processing capability. The processor 101 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor 101 includes a primary core and a secondary core. For specific descriptions of the processor 101, refer to FIG. 2. Details are not described herein.

The storage 103 may be a read-only memory (read-only memory, ROM), a static storage device, a dynamic storage device, or a random access memory (random access memory, RAM). The storage 103 may store a program. When the program stored in the storage 103 is executed by the processor 101, the processor 101 and the communication port 102 are configured to perform a function of the communication device 100.

The communication port 102 uses a transceiver apparatus, for example, but not limited to, a transceiver, to implement a communication between the communication device 100 and another device or a communication network.

It should be noted that although the communication device 100 shown in FIG. 1 merely shows the memory, the processor, and the communication interface, in a specific implementation process, a person skilled in the art should understand that the communication device 100 further includes another component necessary for implementing normal running. In addition, based on a specific requirement, a person skilled in the art should understand that the communication device 100 may further include a hardware component for implementing another additional function. In addition, a person skilled in the art should understand that the communication device 100 may alternatively include merely components necessary for implementing embodiments of this application, but not necessarily include all the components shown in FIG. 1.

FIG. 2 is a schematic diagram of a structure of a processor. The processor may be the processor in the communication device shown in FIG. 1. Alternatively, the processor 101 may be understood as a multi-core processor. The processor 101 may include a primary core 1011, a secondary core 1012, a first in first out (first in first out, FIFO) queue 1013, and a parameter buffer 1014.

The primary core 1011 may alternatively be understood as a primary processor, and the secondary core 1012 may alternatively be understood as a vector processor. The secondary core 1012 obtains a task from the primary core 1011, and runs the task in parallel with the primary core 1011. Alternatively, it is understood as that the primary core 1011 and the secondary core 1012 may perform parallel logical computation, to improve an overall computing speed of the processor 101. In addition, the secondary core 1012 includes a Pong scalar register 10121, a Ping scalar register 10122, and an instruction cache 10123.

The primary core 1011 is configured to transfer an input parameter of a function to the secondary core 1012 by using the parameter buffer 1014.

The primary core 1011 is further configured to send information about the function to the secondary core 1012 by using the FIFO queue 1013. The information about the function is used by the secondary core 1012 to obtain a first function.

The secondary core 1012 is configured to obtain the first function based on the information about the function, and run the function based on the input parameter of the function.

The FIFO queue 1013 is used by the primary core 1011 to transmit information about at least one vector function (vector function, VF) to the secondary core 1012. Information about each VF includes an address (for example, a base address) of the VF, a length of the VF, a slot identifier of the VF, and indication information. The address and the length of the VF are used by the secondary core to obtain the VF. The slot identifier of the VF indicates an identifier corresponding to a slot that is in the parameter buffer 1014 and that stores an input parameter of the VF. The indication information indicates whether to release a slot corresponding to the input parameter of the VF after the secondary core 1012 completes running of the VF. Alternatively, it is understood as that the indication information indicates whether to overwrite the input parameter of the first VF stored in the slot after the secondary core 1012 completes running of the VF. After obtaining the information about the VF, the secondary core 1012 may obtain the VF based on the address and the length of the VF. The secondary core 1012 may further determine, based on the slot identifier of the VF, a slot in the parameter buffer 1014, where a parameter stored in the slot is the input parameter of the VF. After obtaining the VF and the input parameter of the VF, the secondary core 1012 may run the VF based on the input parameter of the VF.

Optionally, the base address of the VF is used to point to an address for storing the VF in an external storage. The secondary core obtains the VF from the external storage based on the base address and length.

For example, the base address of the VF is 48 bits, the length of the VF is 12 bits, and the slot identifier of the VF is 4 bits.

The parameter buffer 1014 includes a plurality of slots, and the plurality of slots are configured to store the input parameter of the VF. Alternatively, it is understood as that the parameter buffer 1014 is used by the primary core 1011 to transfer the input parameter of the at least one VF to the secondary core 1012. A specific process may include the following steps. The primary core 1011 writes the input parameter of the VF into the parameter buffer 1014. The secondary core 1012 copies, based on the slot identifier of the VF, a parameter stored in a slot that corresponds to the slot identifier and that is in the parameter buffer 1014 to the Pong scalar register 10121. When the secondary core 1012 is ready to run the VF, the parameter in the Pong scalar register 10121 is copied to the Ping scalar register 10122, so that the secondary core 1012 uses the parameter in the Ping scalar register 10122 to run the VF.

It should be noted that the FIFO queue 1013 and the parameter buffer 1014 are used to transmit the VF information and the input parameter of the VF between the primary core 1011 and the secondary core 1012. Locations of the FIFO queue 1013 and the parameter buffer 1014 are not specifically limited herein. In other words, the FIFO queue 1013 and the parameter buffer 1014 may be in a memory of the primary core 1011, may be in a memory of the secondary core 1012, or may be in an area outside the primary core 1011 and the secondary core 1012 but within a storage area of the processor 101 (for example, the structure shown in FIG. 1).

In addition, the Pong scalar register 10121 and the Ping scalar register 10122 are essentially two scalar registers for data buffering. This can implement an objective of continuous data transmission by using the two scalar registers simultaneously. Therefore, a data transmission rate is improved. Data obtained by a single scalar register is easily overwritten during transmission and processing. In this structure, data of one scalar register is always be used, and the other scalar register is configured to store data. In other words, two scalar registers are read and written alternately. In other words, the Ping scalar register 10122 may store input parameters corresponding to a VF that is to be run by the secondary core 1012, and the Pong scalar register 10121 may store an input parameter corresponding to a next VF that is to be executed by the secondary core 1012.

Optionally, the Pong scalar register 10121 and the Ping scalar register 10122 each include a plurality of registers. The plurality of registers are configured to store the parameter stored in the slot corresponding to the slot identifier of the VF.

For example, the Pong scalar register 10121 and the Ping scalar register 10122 each include 64 2-byte registers (s0 to s63) or 32 4-byte registers (S0 to S31).

The instruction cache 10123 is used to store instructions corresponding to the base address. The instructions are used by the secondary core 102 to execute the VF. The base address may be used to point to the address for storing the VF in the external storage. The external storage may be the storage 103 shown in FIG. 1.

The following describes functions of the structures in the processor 101 in a plurality of cases by using an example in which two functions are VFs. It may be understood that, in this embodiment, more VFs and VF information may be transferred between the primary core 1011 and the secondary core 1012. Herein, two functions are merely used as an example for description.

The primary core 1011 is configured to transfer input parameters of a first VF to the secondary core 1012 by using the parameter buffer 1014. The primary core 1011 is further configured to send first information to the secondary core 1012 by using the FIFO queue 1013. The first information is used by the secondary core 1012 to obtain the first VF.

The secondary core 1012 is configured to obtain the first VF based on the first information, and run the first VF based on the input parameters of the first VF.

The primary core 1011 is further configured to send second information to the secondary core 1012 by using the FIFO queue 1013. The second information is used by the secondary core 1012 to obtain a second VF.

The secondary core 1012 is configured to obtain the second VF based on the second information.

Optionally, the first information includes a base address of the first VF, a length of the first VF, a first slot identifier, and second indication information. The base address of the first VF is used to point to the first VF. The first slot identifier indicates a slot identifier corresponding to a first slot that is in the parameter buffer 1014 and that stores the input parameters of the first VF. The second indication information indicates whether to release the first slot after the secondary core 1012 completes running of the first VF. Releasing the first slot may be understood as that a parameter in the first slot may be overwritten by a subsequent parameter. Not releasing the first slot may be understood as that a parameter in the first slot may not be overwritten by a subsequent parameter.

The second information includes a base address of the second VF, a length of the second VF, and a second slot identifier. The base address of the second function is used to point to the second VF. The second slot identifier indicates a slot identifier corresponding to a second slot that is in the parameter buffer 1014 and that stores input parameters of the second VF. Releasing the second slot may be understood as that a parameter in the second slot may be overwritten by a subsequent parameter. Not releasing the second slot may be understood as that a parameter in the second slot may not be overwritten by a subsequent parameter.

Optionally, the second information may further include third indication information. The third indication information indicates whether to release the second slot after the secondary core 1012 completes running of the second VF.

In this embodiment, there are a plurality of cases of a function of the primary core 1011 and a function of the secondary core 1012 based on a case in which the input parameters of the first VF are the same as or different from the input parameters of the second VF. The following separately describes the cases.

In a first case, the input parameters of the second VF are the same as the input parameters of the first VF.

In this embodiment of this application, there are two cases in which the input parameters of the second VF are the same as the input parameters of the first VF. The following separately describes the two cases.
1. The input parameters of the second VF are completely the same as the input parameters of the first VF.

When determining that the input parameters of the first VF are the same as the input parameters of the second VF, the primary core 1011 is further configured to control the secondary core 1012 to run the second VF based on the input parameters of the first VF.

Optionally, when the input parameters of the second VF are the same as the input parameters of the first VF, the second indication information specifically indicates to reserve the parameter stored in the first slot after the secondary core completes the running of the first VF. The second slot identifier is the same as the first slot identifier.

That the primary core 1011 is configured to control the secondary core 1012 to run the second VF based on the input parameters of the first VF includes a plurality of specific cases.

1.1. The second indication information in the first information may further indicate that the input parameters of the first VF are the same as the input parameters of the second VF.

12. The second indication information in the first information may further indicate that a slot in which the input parameters of the first VF are located is reused for the input parameters of the second VF.

1.3. The primary core 1011 is configured to transfer first indication information to the secondary core 1012 by using the parameter buffer 1014. The first indication information includes a plurality of bits. The plurality of bits correspond to the plurality of registers in the Pong scalar register 10121. Each of the plurality of bits indicates that a parameter stored in at least one register corresponding to each bit remains unchanged. The plurality of registers in the Pong scalar register 10121 are configured to store the input parameters of the first VF.

Optionally, the first indication information is 32 bits. Each bit in the first indication information corresponds to two 2-byte registers in the Pong scalar register 10121. In other words, the first indication information corresponds to 64 2-byte registers (s0 to s63) or 32 4-byte registers (S0 to S31).

Optionally, 0 or 1 in the first indication information indicates that the parameter stored in the register that is in the Pong scalar register 10121 and that corresponds to the bit remains unchanged. The following merely uses an example in which 0 indicates that the parameter remains unchanged for description.

For example, the first indication information is specifically 0x0000, and correspondingly is (0000, 0000, 0000, 0000) in binary notation. Starting from 0, the first indication information is counted from right to left, and values of the 0^{th} bit to the 15^{th} bit are 0. In this case, parameters stored in two s registers corresponding to each bit remain unchanged. Alternatively, a parameter stored in one S register corresponding to each bit remains unchanged.

That the input parameters of the first VF are the same as the input parameters of the second VF may be understood as that all of the parameters of the second VF are the same as all of the parameters of the first VF. Specifically, the second VF and the first VF have a same parameter at a same location.

### 2. The input parameters of the second VF are partially the same as the input parameters of the first VF.

When the input parameters of the second VF are partially the same as the input parameters of the first VF, the second indication information in the first information specifically indicates to reserve the parameter stored in the first slot after the secondary core 1012 completes the running of the first VF. The second slot identifier is partially the same as the first slot identifier.

The primary core 1011 is further configured to: when determining that the input parameters of the second VF are partially the same as the input parameters of the first VF, transfer a distinguishing parameter and first indication information to the secondary core 1012 by using the parameter buffer 1014, and control the secondary core 1012 to run the second VF based on the distinguishing parameter, the first indication information, and the input parameters of the first VF. The distinguishing parameter is a parameter that is in the input parameters of the second VF and that is different from the input parameters of the first VF. The first indication information includes a plurality of bits. The plurality of bits correspond to the plurality of registers in the Pong scalar register 10121. One bit in the plurality of bits indicates whether a parameter stored in at least one register corresponding to the one bit is changed.

Optionally, the first indication information is 32 bits. Each bit in the first indication information corresponds to two 2-byte registers in the Pong scalar register 10121. In other words, the first indication information corresponds to 64 2-byte registers (s0 to s63) or 32 4-byte registers (S0 to S31).

Optionally, 0 or 1 in the first indication information indicates whether the parameter stored in the register that is in the Pong scalar register 10121 and that corresponds to the bit is changed. The following merely uses an example in which 1 indicates that the parameter is changed and 0 indicates that the parameter remains unchanged for description.

For example, the first indication information is specifically 0x4218, and correspondingly is (0100,0010,0001,1000) in binary notation. Starting from 0, the first indication information is counted from right to left, and values of the 3^{rd} bit, the 4^{th} bit, the 9^{th} bit, and the 14^{th} bit are 1. In this case, a parameter stored in two s registers or one S register corresponding to a bit whose value is 1 in the Pong scalar register 10121 is changed. Parameters stored in two s registers or one S register corresponding to a bit whose value is 0 remain unchanged. In other words, parameters in s6 and s7 registers corresponding to the 3^{rd} bit are changed. Parameters in s8 and s9 registers corresponding to the 4^{th} bit are changed. Parameters in s18 and s19 registers corresponding to the 9^{th} bit are changed. Parameters in s28 and s29 registers corresponding to the 14^{th} bit are changed. Another parameter stored in the registers corresponding to the bit whose value is 0 remains unchanged. Further, the distinguishing parameter is used to describe a value that needs to be changed in the register corresponding to the bit whose value is 1. For example, the parameter transferred by the primary core 1011 to the secondary core 1012 includes the first indication information and the distinguishing parameter. The 1^{st} 32-bit of the parameter is the first indication information, and the following bits indicate the distinguishing parameter. For example, the 2^{nd} 32-bit includes a parameter to be written to the s6 and s7 registers. The 3^{rd} 32-bit includes a parameter to be written to the s8 and s9 registers. The 4^{th} 32-bit includes a parameter to be written to the s18 and s19 registers. The 5^{th} 32-bit includes a parameter to be written to the s28 and s29 registers.

That the input parameters of the first VF are partially the same as the input parameters of the second VF may be understood as that a part of the parameters of the second VF is the same as that of the parameters of the first VF. Specifically, the parameters of the second VF are partially the same as the parameters of the first VF at a same location.

A second case is that the input parameters of the second VF are different from the input parameters of the first VF.

When the input parameters of the second VF are different from the input parameters of the first VF, the second indication information in the first information specifically indicates to release the first slot after the secondary core 1012 completes the running of the first VF. Releasing a slot may be understood as that a parameter in the slot may be overwritten by a subsequent parameter, or the first slot is released for the primary core 1011 to fill the input parameters of the second VF in the first slot.

The primary core 1011 is further configured to: when determining that the input parameters of the first VF are different from the input parameters of the second VF, transfer the input parameters of the second VF to the secondary core 1012 by using the parameter buffer 1014, and control the secondary core 1012 to run the second VF based on the input parameters of the second VF.

For example, input parameters of the first VF are 1, 2, 3, 4, and 5. Input parameters of the second VF are 5, 4, 3, 2, and 1. In this case, it may be considered that the input parameters of the second VF and the input parameters of the first VF do not have a same parameter at a same location.

Optionally, that the input parameters of the second VF are different from the input parameters of the first VF may be understood as that the second VF and the first VF do not have the same parameter, or may be understood as that the second VF and the first VF do not have the same parameter at the same location.

Further, the primary core 1011 writes the input parameters of the first VF to the parameter buffer 1014, and writes information about the first VF to the FIFO queue 1013. The information about the first VF includes the base address of the first VF, the length of the first VF, the first slot identifier of the first VF, and the second indication information. The secondary core 1012 copies, based on the first slot identifier, a parameter stored in the first slot that corresponds to the first slot identifier and that is in the parameter buffer 1014 to the Pong scalar register 10121. When the secondary core 1012 is ready to run the first VF, the secondary core 1012 copies the input parameters that are of the first VF and that are stored in the Pong scalar register 10121 to the Ping scalar register. After the secondary core 1012 obtains the first VF based on the information about the first VF (refer to the foregoing descriptions), the secondary core 1012 may run the first VF based on the input parameters that are of the first VF and that are stored in the Ping scalar register.

When the secondary core 1012 runs the first VF, the primary core 1011 may write the input parameters of the second VF to the parameter buffer 1014, and write information about the second VF to the FIFO queue 1013. The information about the second VF includes the base address of the second VF, the length of the second VF, the second slot identifier of the second VF, and the third indication information. After determining the information about the second VF newly added to the FIFO queue 1013, the secondary core 1012 copies, based on the slot identifier in the information about the second VF, a parameter stored in a slot that corresponds to the slot identifier and that is in the parameter buffer 1014 to the Pong scalar register 10121. After completing the running of the first VF, the secondary core 1012 copies the input parameters that are of the second VF and that are stored in the Pong scalar register 10121 to the Ping scalar register 10122. After obtaining the second VF based on the information about the second VF, the secondary core 1012 may run the second VF based on the input parameters that are of the second VF and that are stored in the Ping scalar register 10122. It may be understood that, when a plurality of VFs are included, a case in which the secondary core runs the plurality of VFs may be understood as a cyclic process in which the secondary core runs the first VF and the second VF. Details are not described herein again.

In this embodiment, in one aspect, the primary core 1011 is configured to: when determining that the input parameters of the second function are the same as the input parameters of the first function, control the secondary core 1012 to run the second function based on the input parameters of the first function. Overheads of transferring the input parameters of the second function are reduced, and time for the secondary core 1012 to run the second function is reduced. In another aspect, the primary core 1011 is further configured to: when determining that the input parameters of the second function are partially the same as the input parameters of the first function, transfer the distinguishing parameter and the first indication information to the secondary core 1012 by using the parameter buffer 1014, and control the secondary core 1012 to run the second function based on the distinguishing parameter, the first indication information, and the input parameters of the first function. Compared with a conventional technology in which the input parameters of the second function are transmitted completely, because storage space occupied for transmitting the distinguishing parameter and the first indication information is smaller than storage space occupied by the input parameters of the second function, the overheads of transferring the input parameters of the second function can be reduced, and the time for the secondary core 1012 to run the second function is reduced. In another aspect, the storage area is divided into the FIFO queue 1013, the parameter buffer 1014, the Pong scalar register 10121, and the Ping scalar register 10122. When running the first function, the secondary core 1012 may further obtain the input parameters of the second function. In other words, two scalar registers are alternately read and written, to improve efficiency of the secondary core 1012 running a plurality of functions.

The foregoing describes the processor provided in embodiments of this application. With reference to an architecture of the processor in FIG. 2, the following describes a communication method provided in embodiments of this application.

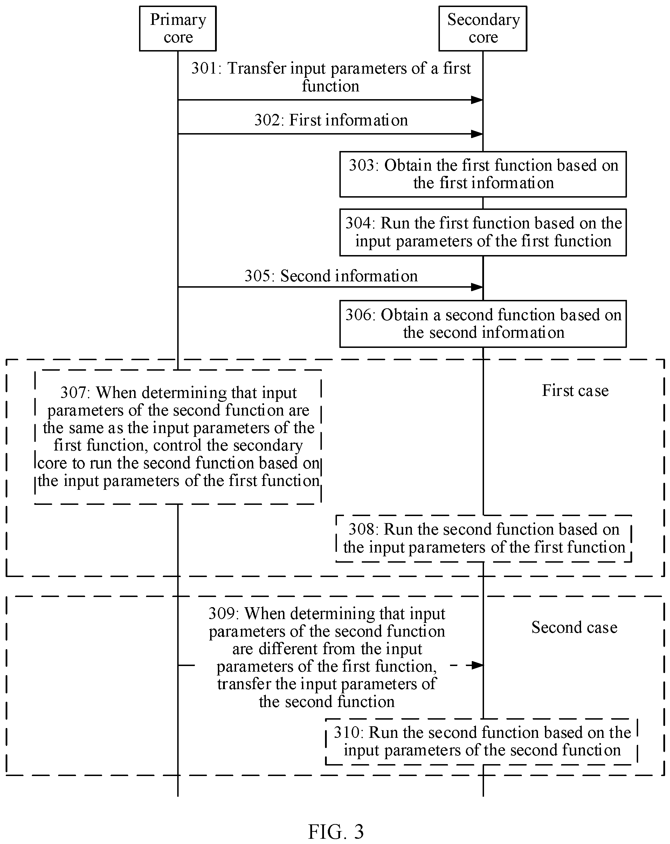

Refer to FIG. 3. An embodiment of the communication method provided in embodiments of this application includes step 301 to step 310.

Step 301: A primary core transfers input parameters of a first function to a secondary core.

The primary core stores the input parameters of the first function (for example, a first VF) in a parameter buffer. The secondary core may obtain a parameter of the first VF from the parameter buffer.

Optionally, the parameter buffer includes a plurality of slots. The plurality of slots are used by the primary core to write the parameter of the first VF. Correspondingly, the secondary core reads the parameters of the first VF from the slots in the parameter buffer, and stores the parameters of the first VF in a Pong register of the secondary core.

For example, the Pong scalar register includes 64 2-byte registers (s0 to s63) or 32 4-byte registers (S0 to S31).

Step 302: The primary core sends first information to the secondary core.

The primary core sends the first information to the secondary core by using an FIFO queue.

Optionally, the first information includes a base address of the first VF, a length of the first VF, a first slot identifier, and second indication information. The base address of the first VF is used to point to the first VF. The first slot identifier indicates a slot identifier corresponding to a first slot that is in the parameter buffer and that stores the input parameters of the first VF. The second indication information indicates whether to release the first slot after the secondary core completes running of the first VF. Releasing the first slot may be understood as that a parameter in the first slot may be overwritten by a subsequent parameter. Not releasing the first slot may be understood as that a parameter in the first slot may not be overwritten by a subsequent parameter.

For example, the base address of the first VF is 48 bits, the length is 12 bits, and the first slot identifier is 4 bits.

Step 303: The secondary core obtains the first function based on the first information.

After receiving the first information, the secondary core may obtain the first VF based on the base address and the length of the first VF in the first information.

Optionally, the secondary core obtains the first VF from the storage shown in FIG. 1 based on the base address and the length of the first VF in the first information.

Step 304: The secondary core runs the first function based on the input parameters of the first function.

The secondary core may use the first slot identifier to read the input parameters of the first VF from an input parameter buffer, and store the input parameters of the first VF in the Pong register of the secondary core. Then, the secondary core copies the parameters in the Pong register to a Ping register, and further use the parameters in the Pong register to run the first VF.

After obtaining the input parameters of the first VF and the first VF, the secondary core runs the first VF based on the input parameters of the first VF.

Step 305: The primary core sends second information to the secondary core.

The primary core sends the second information to the secondary core by using the FIFO queue.

The second information includes a base address of the second VF, a length of the second VF, and a second slot identifier. The base address of the second function is used to point to the second VF. The second slot identifier indicates a slot identifier corresponding to a second slot that is in the parameter buffer and that stores input parameters of the second VF. Releasing the second slot may be understood as that a parameter in the second slot may be overwritten by a subsequent parameter. Not releasing the second slot may be understood as that a parameter in the second slot may not be overwritten by a subsequent parameter.

Optionally, the second information may further include third indication information. The third indication information indicates whether to release the second slot after the secondary core completes running of the second VF.

Step 306: The secondary core obtains the second function based on the second information.

After receiving the second information, the secondary core may obtain the second VF based on the base address and the length of the second VF in the second information.

Optionally, the secondary core obtains the second VF from the storage shown in FIG. 1 based on the base address and the length of the second VF in the second information.

In this embodiment, based on a case in which the input parameters of the first VF are the same as or different from the input parameters of the second VF there are plurality of cases for steps performed by the primary core and steps performed by the secondary core. If the input parameters of the first VF are the same as the input parameters of the second VF, this embodiment further includes step 307 and step 308. If the input parameters of the first VF are different from the input parameters of the second VF, this embodiment further includes step 309 and step 310. The following separately describes the cases.

In a first case, the input parameters of the second VF are the same as the input parameters of the first VF.

Step 307: When determining that the input parameters of the second function are the same as the input parameters of the first function, the primary core controls the secondary core to run the second function based on the input parameters of the first function. This step is optional.

Optionally, when the input parameters of the second VF are the same as the input parameters of the first VF, the second indication information specifically indicates to reserve the parameter stored in the first slot after the secondary core completes the running of the first VF. The second slot identifier is the same as the first slot identifier.

In this embodiment of this application, there are two cases in which the input parameters of the second VF are the same as the input parameters of the first VF. The following separately describes the two cases.

### 1. The input parameters of the second VF are completely the same as the input parameters of the first VF.

There are a plurality of manners in which the primary core controls the secondary core to run the second VF based on the input parameters of the first VF.

1.1. The second indication information in the first information may further indicate that the input parameters of the first VF are the same as the input parameters of the second VF.

12. The second indication information in the first information may further indicate that a slot in which the input parameters of the first VF are located is reused for the input parameters of the second VF.

1.3. The primary core is configured to transfer first indication information to the secondary core by using the parameter buffer. The first indication information includes a plurality of bits. The plurality of bits correspond to a plurality of registers in the Pong scalar register. Each of the plurality of bits indicates that a parameter stored in at least one register corresponding to each bit remains unchanged. The plurality of registers in the Pong scalar register are configured to store the input parameters of the first VF.

Optionally, the first indication information is 32 bits. Each bit in the first indication information corresponds to two 2-byte registers in the Pong scalar register. In other words, the first indication information corresponds to 64 2-byte registers (s0 to s63) or 32 4-byte registers (S0 to S31).

Optionally, 0 or 1 in the first indication information indicates that the parameter stored in the register that is in the Pong scalar register and that corresponds to the bit remains unchanged. The following merely uses an example in which 0 indicates that the parameter remains unchanged for description.

For example, the first indication information is specifically 0x0000, and correspondingly is (0000, 0000, 0000, 0000) in binary notation. Starting from 0, the first indication information is counted from right to left, and values of the 0^{th} bit to the 15^{th} bit are 0. In this case, parameters stored in two s registers corresponding to each bit remain unchanged. Alternatively, a parameter stored in one S register corresponding to each bit remains unchanged.

That the input parameters of the first VF are the same as the input parameters of the second VF may be understood as that all of the parameters of the second VF are the same as all of the parameters of the first VF. Specifically, the second VF and the first VF have a same parameter at a same location.

### 2. The input parameters of the second VF are partially the same as the input parameters of the first VF.

When the input parameters of the second VF are partially the same as the input parameters of the first VF, the second indication information in the first information specifically indicates to reserve the parameter stored in the first slot after the secondary core completes the running of the first VF, so that the input parameters of the first function may be accurately obtained during subsequent reuse. In addition, the second slot identifier is partially the same as the first slot identifier.

When determining that the input parameters of the second VF are partially the same as the input parameters of the first function, the primary core transfers the distinguishing parameter and the first indication information to the secondary core by using the parameter buffer, and controls the secondary core to run the second VF based on the distinguishing parameter, the first indication information, and the input parameters of the first function. The distinguishing parameter is a parameter that is in the input parameters of the VF and that is different from the input parameters of the first VF. The first indication information includes a plurality of bits. The plurality of bits correspond to a plurality of registers in the Pong scalar register. One bit in the plurality of bits indicates whether a parameter stored in at least one register corresponding to the one bit is changed.

Optionally, the first indication information is 32 bits. Each bit in the first indication information corresponds to two 2-byte registers in the Pong scalar register. In other words, the first indication information corresponds to 64 2-byte registers (s0 to s63) or 32 4-byte registers (S0 to S31).

Optionally, 0 or 1 in the first indication information indicates whether the parameter stored in the register that is in the Pong scalar register and that corresponds to the bit is changed. The following merely uses an example in which 1 indicates that the parameter is changed and 0 indicates that the parameter remains unchanged for description.

For example, the first indication information is specifically 0x4218, and correspondingly is (0100,0010,0001,1000) in binary notation. Starting from 0, the first indication information is counted from right to left, and values of the 3^{rd} bit, the 4^{th} bit, the 9^{th} bit, and the 14^{th} bit are 1. In this case, a parameter stored in two s registers or one S register corresponding to a bit whose value is 1 in the Pong scalar register is changed. Parameters stored in two s registers or one S register corresponding to a bit whose value is 0 remain unchanged. In other words, parameters in s6 and s7 registers corresponding to the 3^{rd} bit are changed. Parameters in s8 and s9 registers corresponding to the 4^{th} bit are changed. Parameters in s18 and s19 registers corresponding to the 9^{th} bit are changed. Parameters in s28 and s29 registers corresponding to the 14^{th} bit are changed. Another parameter stored in the register corresponding to the bit whose value is 0 remains unchanged. Further, the distinguishing parameter is used to describe a value that needs to be changed in the register corresponding to the bit whose value is 1. For example, the parameter transferred by the primary core to the secondary core includes the first indication information and the distinguishing parameter. The 1^{st} 32-bit of the parameter is the first indication information, and the following bits indicate the distinguishing parameter. For example, the 2^{nd} 32-bit includes a parameter to be written to the s6 and s7 registers. The 3^{rd} 32-bit includes a parameter to be written to the s8 and s9 registers. The 4^{th} 32-bit includes a parameter to be written to the s18 and s19 registers. The 5^{th} 32-bit includes a parameter to be written to the s28 and s29 registers.

That the input parameters of the first VF are partially the same as the input parameters of the second VF may be understood as that a part of the parameters of the second VF is the same as that of the parameters of the first VF. Specifically, the parameters of the second VF are partially the same as the parameters of the first VF at a same location.

Step 308: The secondary core runs the second function based on the input parameters of the first function. This step is optional.

For the foregoing case in which the input parameters of the second VF are completely the same as the input parameters of the first VF, after receiving the first information, the secondary core may use the input parameters of the first VF to run the second VF based on the second indication information. The second indication information indicates that the input parameters of the first VF are the same as the input parameters of the second VF, or indicate that a slot in which the input parameters of the first VF are located is reused for the input parameters of the second VF.

In a second case, the input parameters of the second VF are different from the input parameters of the first VF.

Step 309: When determining that the input parameters of the second function are different from the input parameters of the first function, the primary core transfers the input parameters of the second function. This step is optional.

When the input parameters of the second VF are different from the input parameters of the first VF, the second indication information in the first information specifically indicates to release the first slot after the secondary core completes the running of the first VF. Releasing a slot may be understood as that a parameter in the slot may be overwritten by a subsequent parameter, or the first slot is released for the primary core to fill the input parameters of the second VF in the first slot.

When determining that the input parameters of the first VF are different from the input parameters of the second VF, the primary core transfers the input parameters of the second VF to the secondary core by using the parameter buffer.

For example, input parameters of the first VF are 1, 2, 3, 4, and 5. Input parameters of the second VF are 5, 4, 3, 2, and 1. In this case, it may be considered that the input parameters of the second VF and the input parameters of the first VF do not have a same parameter at a same location.

Optionally, that the input parameters of the second VF are different from the input parameters of the first VF may be understood as that the second VF and the first VF do not have the same parameter, or may be understood as that the second VF and the first VF do not have the same parameter at the same location.

Step 310: The secondary core runs the second function based on the input parameters of the second function. This step is optional.

After obtaining the second information, the secondary core stores, in the Pong register of the secondary core based on the second slot identifier in the second information, input parameters that are of the second VF and that are stored in the parameter buffer. After using the input parameters of the first VF in the Pong register to complete the running of the second VF, the secondary core copies the input parameters that are of the second VF and that are stored in the Pong register to the Ping register, and uses the input parameters that are of the second VF and that are stored in the Ping register to run the second VF.

When the secondary core runs the first VF, the primary core may write the input parameters of the second VF to the parameter buffer, and write the second information to the FIFO queue. After determining the second information newly added to the FIFO queue, the secondary core copies, based on the second slot identifier in the second information, a parameter stored in a second slot that corresponds to the second slot identifier and that is in the parameter buffer to the Pong scalar register. After completing the running of the first VF, the secondary core copies the input parameters of the second VF stored in the Pong scalar register to the Ping scalar register. After obtaining the second VF based on the second information, the secondary core may run the second VF based on the input parameters that are of the second VF and that are stored in the Ping scalar register. It may be understood that, when a plurality of VFs are included, a case in which the secondary core runs the plurality of VFs may be understood as a cyclic process in which the secondary core runs the first VF and the second VF. Details are not described herein again.

In a possible implementation, if the input parameters of the first VF are the same as the input parameters of the second VF, this embodiment may include step 301 to step 308. In another possible implementation, if the input parameters of the first VF are different from the input parameters of the second VF, this embodiment may include step 301 to step 306, step 309, and step 310. In another possible implementation, this embodiment may include step 301 to step 310.

In this embodiment, in one aspect, when determining that the input parameters of the second function are the same as the input parameters of the first function, the primary core controls the secondary core to run the second function based on the input parameters of the first function. Overheads of transferring the input parameters of the second function are reduced, and time for the secondary core to run the second function is reduced. In another aspect, when determining that the input parameters of the second function are partially the same as the input parameters of the first function, the primary core transfers the distinguishing parameter and the first indication information to the secondary core by using the parameter buffer, and controls the secondary core to run the second function based on the distinguishing parameter, the first indication information, and the input parameters of the first function. Compared with a conventional technology in which the input parameters of the second function are transmitted completely, because storage space occupied for transmitting the distinguishing parameter and the first indication information is smaller than storage space occupied by the input parameters of the second function, the overheads of transferring the input parameters of the second function can be reduced, and the time for the secondary core to run the second function is reduced. In another aspect, a storage area is divided into the FIFO queue, the parameter buffer, the Pong scalar register, and the Ping scalar register. When running the first function, the secondary core may further obtain the input parameters of the second function. In other words, two scalar registers are alternately read and written, to improve efficiency of the secondary core running a plurality of functions.

The communication method and the related device provided in embodiments of this application are described in detail above. The principle and implementation of this application are described herein by using specific examples. The description about embodiments of this application is merely provided to help understand the method and core ideas of this application. In addition, a person of ordinary skill in the art can make variations and modifications to this application in terms of the specific implementations and application scopes based on the ideas of this application. Therefore, the content of this specification shall not be construed as a limit to this application.

## Claims

1. A processor, comprising:
a primary core, configured to transfer input parameters of a first function to a secondary core, wherein
the primary core is further configured to send first information to the secondary core, wherein the first information is used by the secondary core to obtain the first function;
the secondary core is configured to obtain the first function based on the first information, and run the first function based on the input parameters of the first function;
the primary core is further configured to send second information to the secondary core, wherein the second information is used by the secondary core to obtain a second function;
the secondary core is further configured to obtain the second function based on the second information; and
the primary core is further configured to: when determining that input parameters of the second function are the same as the input parameters of the first function, control the secondary core to run the second function based on the input parameters of the first function.

2. The processor according to claim 1, wherein that input parameters of the second function are the same as the input parameters of the first function comprises: a part of the input parameters of the second function is the same as that of the input parameters of the first function; and
the primary core is further configured to transfer a distinguishing parameter to the secondary core, and control the secondary core to run the second function based on the distinguishing parameter and the input parameters of the first function, wherein the distinguishing parameter is a parameter that is in the input parameters of the second function and that is different from the input parameters of the first function.

3. The processor according to claim 2, wherein the secondary core is further configured to store the input parameters of the first function in a plurality of registers;
the primary core is further configured to transfer first indication information to the secondary core, wherein the first indication information indicates the secondary core to update a parameter stored in a first register to the distinguishing parameter, the plurality of registers comprise the first register and a second register, and the second register stores the same part of the parameters; and
the secondary core is specifically configured to use, based on the first indication information, the distinguishing parameter to update the parameter stored in the first register, and use the distinguishing parameter and the same part of the parameters as the input parameters of the second function to run the second function.

4. The processor according to claim 3, wherein the first indication information comprises a plurality of bits, the plurality of bits correspond to the plurality of registers, and one of the plurality of bits indicates whether the secondary core uses the distinguishing parameter to update a parameter stored in at least one register corresponding to the one bit.

5. The processor according to any one of claims 1 to 4, wherein the primary core is further configured to: when determining that the input parameters of the second function are different from the input parameters of the first function, transfer the input parameters of the second function to the secondary core, and control the secondary core to run the second function based on the input parameters of the second function.

6. The processor according to any one of claims 1 to 5, wherein the processor further comprises a first in first out FIFO queue; and
the secondary core is specifically configured to send the first information and the second information to the secondary core by using the FIFO queue.

7. The processor according to any one of claims 1 to 6, wherein the processor further comprises a parameter buffer;
the primary core is specifically configured to transfer the input parameters of the first function by using the parameter buffer;
the secondary core is further configured to store, in the plurality of registers of the secondary core, input parameters that are of the first function and that are stored in the parameter buffer;
the first information comprises an address of the first function, a length of the first function, a first slot identifier of the first function, and second indication information of the first function, the first slot identifier indicates a slot identifier corresponding to a first slot that is in the parameter buffer and that stores the input parameters of the first function, and the second indication information indicates whether to release the first slot after the secondary core completes running of the first function;
when the input parameters of the second function are the same as the input parameters of the first function, the second indication information specifically indicates to reserve the parameters stored in the first slot after the secondary core completes the running of the first function, and a second slot identifier is completely or partially the same as the first slot identifier; or
when the input parameters of the second function are different from the input parameters of the first function, the second indication information specifically indicates to release the first slot after the secondary core completes the running of the first function; and
the second information comprises an address of the second function, a length of the second function, and the second slot identifier of the second function, and the second slot identifier indicates a slot identifier corresponding to a second slot that is in the parameter buffer and that stores the input parameters of the second function.

8. A communication method, applied to a processor, wherein the processor comprises a primary core and a secondary core; and the method comprises:
transferring, by the primary core, input parameters of a first function to the secondary core;
sending, by the primary core, first information to the secondary core, wherein the first information is used by the secondary core to obtain the first function;
obtaining, by the secondary core, the first function based on the first information, and running the first function based on the input parameters of the first function;
sending, by the primary core, second information to the secondary core, wherein the second information is used by the secondary core to obtain a second function;
obtaining, by the secondary core, the second function based on the second information; and
when determining that input parameters of the second function are the same as the input parameters of the first function, controlling, by the primary core, the secondary core to run the second function based on the input parameters of the first function.

9. The method according to claim 8, wherein that input parameters of the second function are the same as the input parameters of the first function comprises: a part of the input parameters of the second function is the same as that of the input parameters of the first function; and
the method further comprises:
transferring, by the primary core, a distinguishing parameter to the secondary core, and controlling the secondary core to run the second function based on the distinguishing parameter and the input parameters of the first function, wherein the distinguishing parameter is a parameter that is in the input parameters of the second function and that is different from the input parameters of the first function.

10. The method according to claim 9, wherein the method further comprises:
transferring, by the primary core, first indication information to the secondary core, wherein the first indication information indicates the secondary core to update a parameter stored in a first register to the distinguishing parameter, a plurality of registers comprise the first register and a second register, the second register stores the same part of the parameters, and the plurality of registers are configured to store the input parameters of the first function; and
using, by the secondary core based on the first indication information, the distinguishing parameter to update the parameter stored in the first register, and using the distinguishing parameter and the same part of the parameters as the input parameters of the second function to run the second function.

11. The method according to claim 10, wherein the first indication information comprises a plurality of bits, the plurality of bits correspond to the plurality of registers, and one of the plurality of bits indicates whether the secondary core uses the distinguishing parameter to update a parameter stored in at least one register corresponding to the one bit.

12. The method according to any one of claims 8 to 11, wherein the method further comprises:
when determining that the input parameters of the second function are different from the input parameters of the first function, transferring, by the primary core, the input parameters of the second function to the secondary core, and controlling the secondary core to run the second function based on the input parameters of the second function.

13. The method according to any one of claims 8 to 12, wherein the processor further comprises a first in first out FIFO queue;
the sending, by the primary core, first information to the secondary core comprises:
sending, by the secondary core, the first information to the secondary core by using the FIFO queue; and
the sending, by the primary core, second information to the secondary core comprises:
sending, by the secondary core, the second information to the secondary core by using the FIFO queue.

14. The method according to any one of claims 8 to 13, wherein the processor further comprises a parameter buffer;
the transferring, by the primary core, input parameters of a first function to the secondary core comprises:
transferring, by the primary core, the input parameters of the first function by using the parameter buffer; and
the method further comprises:
storing, by the secondary core in the plurality of registers of the secondary core, input parameters that are of the first function and that are stored in the parameter buffer, wherein
the first information comprises an address of the first function, a length of the first function, a first slot identifier of the first function, and second indication information of the first function, the first slot identifier indicates a slot identifier corresponding to a first slot that is in the parameter buffer and that stores the input parameters of the first function, and the second indication information indicates whether to release the first slot after the secondary core completes running of the first function;
when the input parameters of the second function are the same as the input parameters of the first function, the second indication information specifically indicates to reserve the parameters stored in the first slot after the secondary core completes the running of the first function, and a second slot identifier is completely or partially the same as the first slot identifier; or
when the input parameters of the second function are different from the input parameters of the first function, the second indication information specifically indicates to release the first slot after the secondary core completes the running of the first function; and
the second information comprises an address of the second function, a length of the second function, and the second slot identifier of the second function, and the second slot identifier indicates a slot identifier corresponding to a second slot that is in the parameter buffer and that stores the input parameters of the second function.
